# EUROPEAN PATENT APPLICATION

(11) **EP 4 661 126 A1**
(43) Date of publication of application: **10.12.2025**
(21) Application number: 25174234.2
(22) Date of filing: 05.05.2025
(51) Int. Cl.: H01M 10/04, H01M 50/103

(54) **APPARATUS AND METHOD FOR MANUFACTURING SECONDARY BATTERY INCLUDING HORIZONTAL INSERT UNIT OF ELECTRODE ASSEMBLY**

(30) Priority: 03.06.2024 KR 20240072721
(71) Applicant: SAMSUNG SDI CO., LTD., Yongin-si, Gyeonggi-do 17084 (KR)
(72) Inventor: SHIN, Dongmin, 17084 Yongin-si, Gyeonggi-do (KR)
(74) Representative: Gulde & Partner

(57) **Abstract**

An apparatus and a method for manufacturing a secondary battery involve an electrode assembly being horizontally inserted into a case in a state in which the case and the electrode assembly are placed horizontally in order to prevent deformation of related parts such as a current collector due to the weight of the electrode assembly. The apparatus for manufacturing a secondary battery includes a horizontal insert unit in which a cap plate is assembled and which horizontally inserts a horizontally mounted electrode assembly into an opening of a horizontally mounted case.

## Description

### FIELD

The present disclosure relates to an apparatus and a method for manufacturing a secondary battery using a technique of horizontally inserting an electrode assembly into a case.

### BACKGROUND

Different from a primary battery that cannot be charged, a secondary battery is a battery that can be charged and discharged. A secondary battery largely includes an electrode assembly made of a positive electrode plate, a separator, and a negative electrode plate, a case (or can) which accommodates the electrode assembly, and a cap assembly including a cap plate bonded to the case and external terminals through which the electrode assembly is connected to an external power source or load.

The electrode assembly is assembled together with related parts to the cap plate of the cap assembly. For example, the electrode assembly may be welded to a current collector or sub-plate, and the current collector or sub-plate may be assembled to the cap plate. The assembled electrode assembly is inserted into the case through an opening of the case, and the cap plate is bonded to the opening of the case.

### SUMMARY

Embodiments detailed herein relate to an apparatus and a method for manufacturing a secondary battery in which an electrode assembly is horizontally inserted into a case in a state in which the case and the electrode assembly are placed horizontally in order to prevent deformation of related parts such as a current collector due to an own weight of the electrode assembly.

According to some embodiments, there is provided an apparatus for manufacturing a secondary battery, which includes a horizontal insert unit in which a cap plate is assembled and which horizontally inserts a horizontally mounted electrode assembly into an opening of a horizontally mounted case. The apparatus for manufacturing a secondary battery may include an electrode assembly support configured to horizontally mount and support the electrode assembly, and a case support assembly configured to horizontally mount and support the case, wherein one of the electrode assembly and the case may horizontally move to insert the electrode assembly into the case.

According to some embodiments, there is provided a method of manufacturing a secondary battery, which includes manufacturing a case, assembling a cap plate with an electrode assembly, mounting and supporting the electrode assembly horizontally, mounting and supporting the case horizontally, and performing a horizontal insertion by horizontally moving one of the electrode assembly and the case to insert the electrode assembly into the case.

According to some embodiments, there is provided a horizontal insert device including an electrode assembly support configured to horizontally mount and support an electrode assembly in which a cap plate is assembled, and a case support configured to horizontally mount and support a case, and wherein one of the electrode assembly and the case may horizontally move to insert the electrode assembly into the case.

However, embodiments are not limited to the above, and other aspects not specifically mentioned herein and aspects that would address issues related to assembly of a secondary battery will be clearly understood by those skilled in the art as being within the scope of the claims.

### BRIEF DESCRIPTION OF THE DRAWINGS

The following drawings attached to the present specification illustrate exemplary embodiments of the present disclosure and serve to further assist with understanding of the technical idea of the present disclosure together with the detailed description of the present disclosure, which will be described below, and therefore the present disclosure should not be construed as being limited to the details shown in the accompanying drawings, in which:
FIG. 1 is a top perspective view of a prismatic secondary battery according to some embodiments;
FIG. 2 is a cross-sectional view along I-I' of FIG. 1;
FIG. 3 is a schematic view for describing a method of vertically inserting an electrode assembly into a case (vertical insert) according to the related art;
FIG. 4A is a schematic view for describing the concept of an exemplary horizontal insert method according to some embodiments;
FIG. 4B is a schematic diagram of a configuration of an apparatus implementing a horizontal insert method according to some embodiments;
FIG. 5A, FIG. 5B, and FIG. 5C are schematic explanatory views of an example in which a case is fixed and the electrode assembly is inserted into the case by moving the electrode assembly horizontally according to some embodiments;
FIG. 6A, FIG. 6B, and FIG. 6C are schematic views of an example of a horizontal insert device for moving and inserting the electrode assembly into the stationary case according to some embodiments;
FIG. 7 is a view of one example of a disconnection and separation mechanism between a case support supporting the case and a divided block of a downward surface support of the electrode assembly according to some embodiments;
FIG. 8 is a view of one example of a moving mechanism of the electrode assembly according to some embodiments;
FIG. 9A, FIG. 9B, and FIG. 9C are schematic views of a horizontal insert device in which the electrode assembly is inserted into the case by moving the case toward the fixed electrode assembly according to some embodiments;
FIG. 10 is a view of an exemplary case moving mechanism according to some embodiments;
FIG. 11 is a view of a secondary battery module in which secondary batteries are arranged according to one or more embodiments;
FIG. 12 is a view of a secondary battery pack including the secondary battery module illustrated in FIG. 11; and
FIG. 13 is a conceptual view of a vehicle including the secondary battery pack illustrated in FIG. 12.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

A secondary battery can be charged and discharged and includes an electrode assembly. In the insert process of inserting the electrode assembly into the case, a direction in which the electrode assembly is inserted is typically a vertical downward direction in a state in which the cap plate is placed on an upper side and the electrode assembly is placed on a lower side. The direction "vertical downward" throughout this disclosure may be the direction of gravity.

As battery size has increased, a weight of the battery has also increased. In the case of the conventional vertical insert process, there is a concern that related parts, for example, the current collector or sub-plate described above, may be deformed or damaged due to a weight of the electrode assembly, and a welded portion may be damaged.

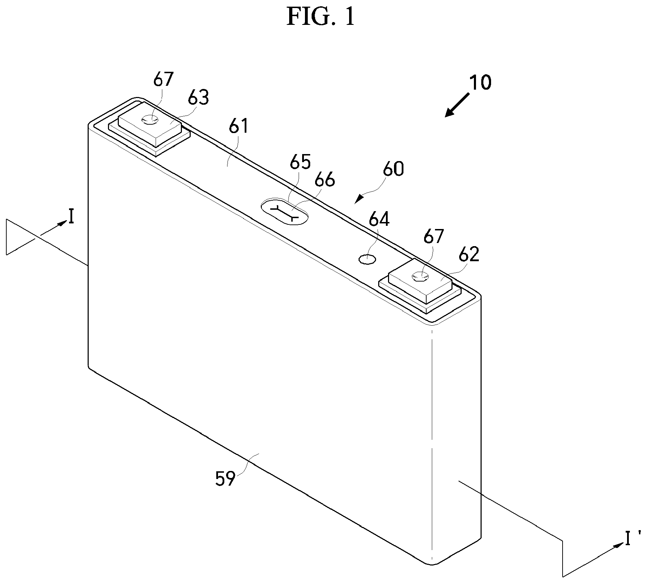

FIG. 1 is a top perspective view of an exterior of a secondary battery 10 according to some embodiments.

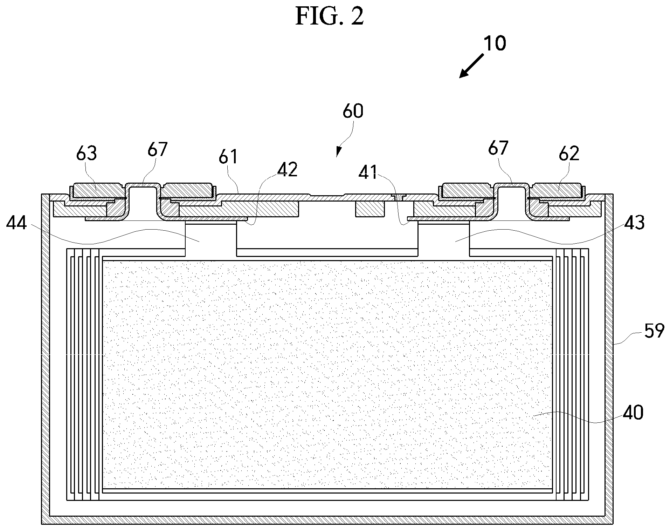

A case 59 forms the overall exterior of the secondary battery 10 and may be formed of a conductive metal such as aluminum, an aluminum alloy, or nickel-plated steel. In addition, the case 59 may provide a space in which an electrode assembly 40 (FIG. 2) is accommodated. The case 59 as exemplarily shown in Fig. 1 and Fig. 2 has a rectangular cross section, one dimension extending in the vertical direction, one dimension extending in the horizontal direction. In the embodiment exemplarily shown, the horizontal extension (length) of the case 59 is larger than the vertical extension (height) of the case 59.

A cap assembly 60 may include a cap plate 61 covering an opening of the case 59. In some embodiments, the case 59 and the cap plate 61 may each be formed of a conductive material. Here, a first terminal 62 and a second terminal 63 may be electrically connected to a positive electrode tab and a negative tab inside the cased and installed to protrude outwardly through the cap plate 61.

An electrolyte injection port 64 may be formed in the cap plate 61, a gas discharge hole 65 may be opened, and a gas discharge device (vent) may be connected to the gas discharge hole 65. A gas discharge device 66 is opened by gas generated inside the battery and performs degassing.

FIG. 2 is a cross-sectional view along I-I' of FIG. 1 and illustrates an internal configuration of the secondary battery 10 and a structure of the cap assembly 60 according to some embodiments.

An electrode assembly 40 may be formed by winding or stacking a first electrode plate, a separator, and a second electrode plate, which are formed in a plate shape or a film shape. When the electrode assembly 40 is a winding type (referred to as a jelly roll), a winding coiling axis may be parallel to a longitudinal or horizontal direction of the case. Alternatively, the electrode assembly 40 may be a stack type rather than the winding type.

The shape of the electrode assembly 40 is not intended to be limited by the exemplary illustration and embodiments detailed herein are applicable to different configurations of the electrode assembly 40. For example, the electrode assembly 40 may be a Z-stack electrode assembly in which a first electrode plate and a second electrode plate are inserted on both sides of a separator bent in a Z-stack. In addition, the electrode assembly 40 may be accommodated inside the case 59 by stacking long sides of one or more electrode assemblies 40 to be adjacent to each other, and the number of electrode assemblies 40 is not limited in the present disclosure. The first electrode plate of the electrode assembly 40 may serve as a negative electrode and the second electrode plate thereof may serve as a positive electrode, or vice versa.

The first electrode plate may be formed by applying a first electrode active material, such as graphite or carbon, on a first electrode substrate made of metal foil, such as copper, a copper alloy, nickel, or a nickel alloy, and may include a first electrode tab (or a first uncoated portion) which is a region in which the first electrode active material is not applied. A first electrode tab 43 may be a passage for a current flow between the first electrode plate and a first current collector 41. In some embodiments, the first electrode tab 43 may be formed by being cut to protrude toward one side in advance when the first electrode plate is manufactured or may further protrude toward one side than the separator without a separate cut.

The second electrode plate may be formed by applying a second electrode active material, such as a transition metal oxide, on a substrate made of a metal foil, such as aluminum or an aluminum alloy and may include a second electrode tab (or second uncoated portion) 44 which is a region in which the second electrode active material is not applied. The second electrode tab 44 may be a passage for a current flow between the second electrode plate and a second current collector 42. In some embodiments, the second electrode tab 44 may be formed by being cut to protrude toward the other side in advance when the second electrode plate is manufactured or may further protrude toward the other side than the separator without a separate cut.

In FIG. 2, the first electrode tab 43 and the second electrode tab 44 are shown as being positioned toward an upper portion of the electrode assembly 40, i.e., toward a lower surface of the cap plate 61, but the present disclosure is not limited thereto.

The separator serves to allow movement of lithium ions and prevent a short circuit between the first electrode plate and the second electrode plate. The separator may be made of, for example, a polyethylene film, a polypropylene film, or a polyethylene-polypropylene film.

In some embodiments, the electrode assembly 40 may be accommodated in the case 59 together with an electrolyte.

In the electrode assembly 40, first electrode tabs 43 and second electrode tabs 44 protruding from the first electrode plate and the second electrode plate may be connected to the first current collector 41 and the second current collector 42, respectively.

The first current collector 41 and the second current collector 42 may be electrically connected to the first terminal 62 and the second terminal 63, respectively, which are described in FIG. 1, through connection members 67. In some embodiments, outer surfaces of the connection members 67 may be screw-machined and fastened to the first terminal 62 and the second terminal 63 through screw coupling. However, the present disclosure is not limited thereto, and the connection members 67 may be coupled to the first terminal 62 and the second terminal 63 by riveting or welding.

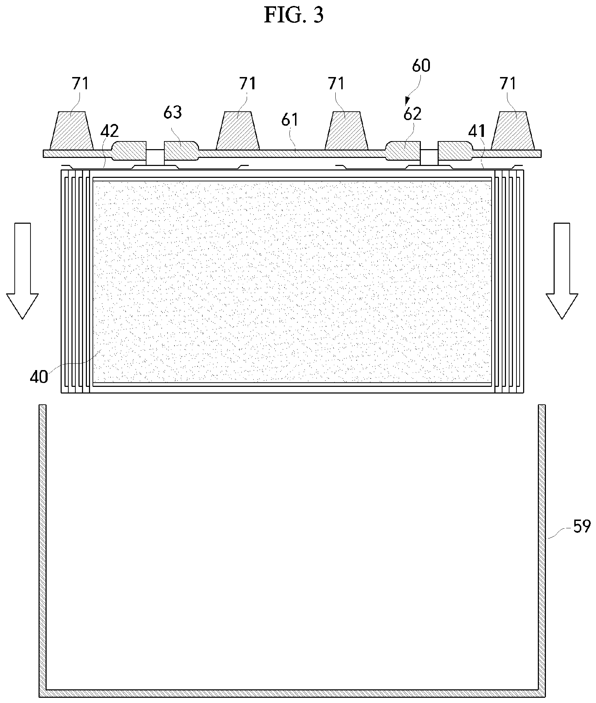

FIG. 3 is a schematic diagram for describing a method (vertical insert) of vertically inserting the electrode assembly 40 into the case 59 according to the related art in order to help with understanding of the present disclosure. The terminals 62 and 63 are installed on the cap plate 61 to constitute the cap assembly 60, and the terminals 62 and 63 are connected to the current collectors 41 and 42 coupled to the electrode tabs of the electrode assembly 40. The cap assembly 60 may extend in a horizontal plane substantially perpendicular to the direction of gravity.

A bottom surface of the case 59 is placed upright, the cap plate 61 is held by a vacuum adsorber 71, and the electrode assembly 40 moves down vertically along the direction of gravity to be inserted into the case 59.

Recently, as the demand for an increased capacity of a secondary battery has increased, a size of the electrode assembly 40 has been increasing, and a weight thereof has also been increasing. Thus, in the case of the vertical insert method, along the direction of gravity, there is a risk that the current collectors 41 and 42 or other related members may be deformed or damaged due to the weight of the electrode assembly 40, and welded portions may be damaged.

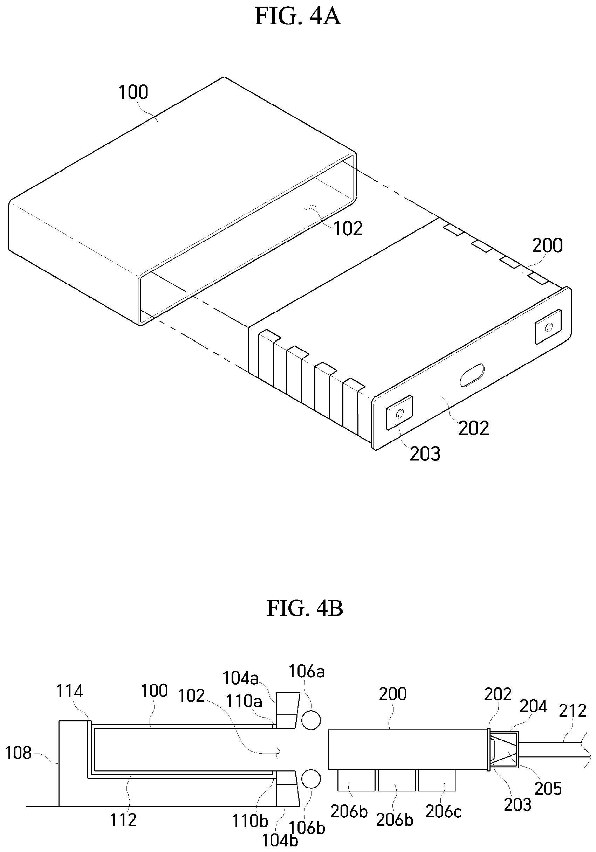

FIG. 4A is a schematic view for describing the concept of a horizontal insert method according to some embodiments. Throughout the application, the term "horizontal" may refer to a direction perpendicular to the direction of gravity, i.e. to a direction of constant gravitation or constant gravitational force.

In order to prevent deformation of an electrode assembly 200 due to its own weight, an insertion direction of the electrode assembly is horizontal. That is, in a state in which a wide surface of the case 100 [G&P1]may be arranged horizontally to face downward, and a wide surface of the electrode assembly 200 is arranged horizontally to face downward, one of the electrode assembly 200 and the case 100 moves horizontally to insert the electrode assembly 200 into the case 100. During horizontal insertion, the surface of the case 100 in which the opening 102 is formed may extend in the horizontal and vertical direction, which may be a plane perpendicular to a ground surface. In embodiments, the surface of the case 100 in which the opening 102 is formed may be perpendicular to the wide surface of the case 100. During horizontal insertion, the case 100 may be supported on a surface parallel to a ground surface by the wide surface of the case 100.

During the horizontal insertion, in some embodiments, the case 100 may be fixed and the electrode assembly 200 may be inserted into the case 100 by moving the electrode assembly 200 horizontally, and in some other embodiments, the electrode assembly 200 may be fixed to be inserted into the case 100 by moving the case 100 horizontally. In embodiments, it may also be possible that both the electrode assembly 20 and the case 100 move towards each other[G&P2].

FIG. 4B is a schematic diagram of a configuration of an apparatus implementing a horizontal insert method according to some embodiments. FIG. 4B illustrates an exemplary embodiment of a case support 108 which supports the case 100 in a horizontal state and an electrode assembly support 204 which supports the electrode assembly 200 in a horizontal state.

According to the exemplary embodiment, the case support 108 has an L-shape on which the bottom surface of the case 100 (in FIG. 4B, a left-facing surface of the case 100 mounted horizontally) and a down-facing surface of the case 100 (hereinafter referred to as a "downward surface") may be seated, but the present disclosure is not limited thereto. A buffer material 112 may be attached to the case support 108 to prevent the downward surface of the case 100 that is laid down from being damaged. In addition, a buffer material 114 may be attached to the case support 108 to prevent the left-facing surface of the case 100 from being damaged. The case support 108 is not limited to be formed from an integral, solid material. Each part or both parts, the horizontal and perpendicular support of the case support 108, may be formed from pillars or may have a grid like structure.

Meanwhile, in a state in which the electrode assembly 200 is arranged horizontally, the electrode assembly support 204 may hold and/or support a cap plate 202 of the electrode assembly 200. The electrode assembly support 204 may include a vacuum adsorber 205 capable of suctioning and supporting the cap plate 202 connected to the electrode assembly 200. The electrode assembly support 204 may be supported by connecting to a support member 212.

Other components shown in FIG. 4B will be described below.

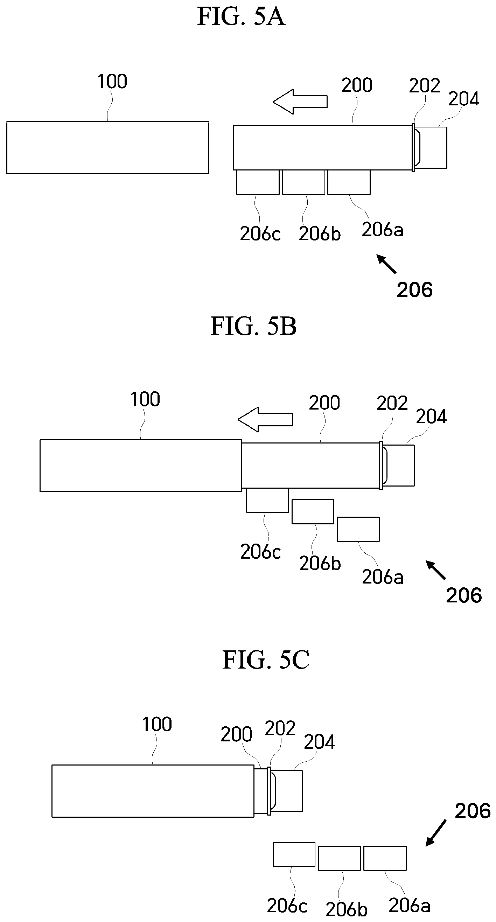

FIGS. 5A to 5C are schematic explanatory views of an exemplary embodiment in which the case 100 is fixed and the electrode assembly 200 is inserted into the case 100 by moving the electrode assembly 200 horizontally.

In a state in which the case 100 and the electrode assembly 200 are mounted horizontally, the electrode assembly support 204 holds the cap plate 202 of the electrode assembly 200 and moves the electrode assembly 200 horizontally to insert the electrode assembly 200 into the case 100.

In order to prevent the electrode assembly 200 from sagging due to its own weight, the downward surface of the electrode assembly 200 that is laid down may be held up and supported. A downward surface support 206 formed of a plurality of divided blocks to support the downward surface is shown in FIGS. 5A to 5C. The plurality of divided blocks constituting the downward surface support are sequentially disconnected and separated so as not to be caught by the cap assembly 60 or the cap plate 202 while the electrode assembly 200 is being inserted. The shown downward surface support 206 includes three divided blocks 206a to 206c, but the present disclosure is not limited thereto.

Initially, as in FIG. 5A, all the divided blocks 206a to 206c of the downward surface support 206 support the downward surface of the electrode assembly 200.

Thereafter, as shown in FIG. 5B, the electrode assembly support 204 supporting the cap plate 202 moves the electrode assembly 200 in a horizontal direction to enter the electrode assembly 200 into the case 100 to be continuously moved, and thus the first divided block 206a of the downward surface support is disconnected and separated from the electrode assembly 204 before being caught by the cap plate 202. Then, as the electrode assembly 200 is further moved, the second divided block 206b is separated before being caught by the cap plate 202. The divided blocks 206a-c may each be support by a common surface.

Finally, as shown in FIG. 5C, when the electrode assembly 200 is almost fully inserted into the case 100, the last divided block 206c of the downward surface support is separated.

In this way, the downward surface support formed of the plurality of divided blocks 206a to 206c may prevent the downward surface from sagging due to the weight of the electrode assembly 200 and easily perform the horizontal insertion of the electrode assembly 200 without being caught by the cap plate 202.

In another embodiment, when the electrode assembly 200 is fixed and the case 100 is moved, the divided block 206c, which is positioned at the leftmost side among the divided blocks constituting the downward surface support, may be separated first so as not to be caught by the case 100. Thereafter, the divided blocks 206b and 206a may be separated sequentially.

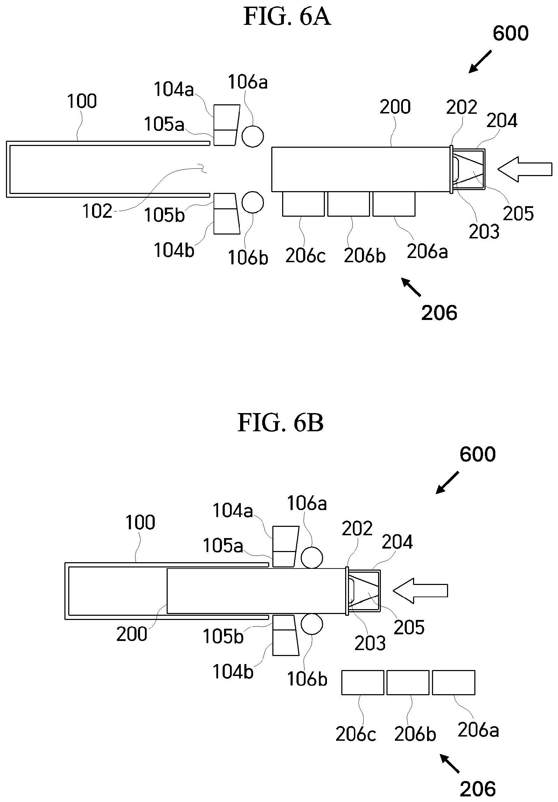

FIGS. 6A to 6C are block diagrams of an exemplary embodiment of a horizontal insert device 600 for moving and inserting the electrode assembly 200 into the stationary case 100.

The horizontal insert device 600 according to this embodiment may include opening guides 104a and 104b for preventing the electrode assembly 200 from being damaged by a sharp edge constituting the surroundings of the opening 102 of the stationary case 100 and guiding a front end of the electrode assembly 200 into the opening 102 smoothly, guide rollers 106a and 106b positioned on a path through which the electrode assembly 200 is horizontally transported from outside of the case 100 to the opening 102 and cooperating with the opening guides 104a and 104b to guide movement of the electrode assembly 200 toward the opening 102, the electrode assembly support 204 for holding the cap plate 202 of the electrode assembly 200 and moving the electrode assembly 200 horizontally, and the downward surface support, as described above, formed of the plurality of divided blocks 206a to 206c for supporting the downward surface of the electrode assembly 200 and preventing the electrode assembly 200 from sagging due to its own weight.

The electrode assembly support 204 may hold and fix the cap plate 202 of the electrode assembly 200 using the vacuum adsorber 205, but the present disclosure is not limited thereto.

Buffer materials 105a and 105b, which have inner surfaces that substantially match an inner surface of the opening 102, may be attached to surfaces of the opening guides 104a and 104b. The buffer materials 105a and 105b are for preventing the electrode assembly 200 from being damaged by the opening guides 104a and 104b during the process of being inserted into the opening 102 of the case 100.

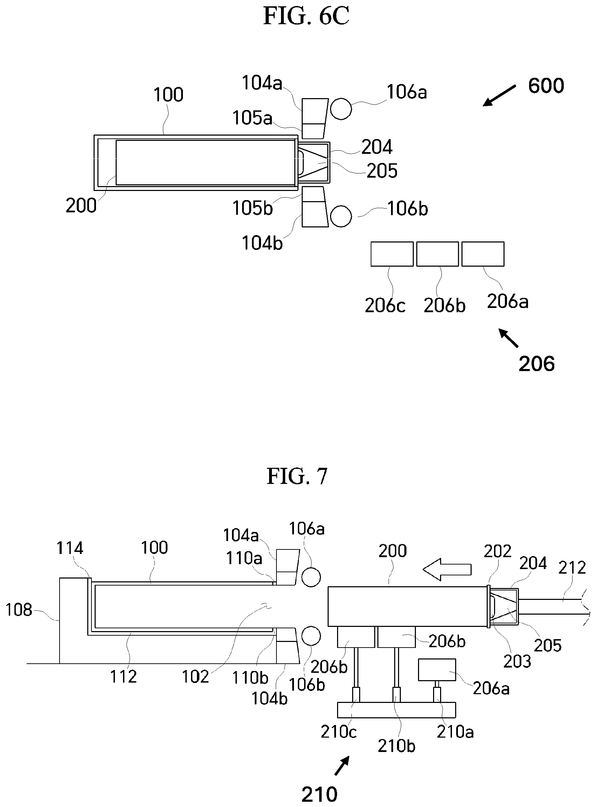

After the opening guides 104a and 104b and the guide rollers 106a and 106b guide the electrode assembly 200 and thus the electrode assembly 200 is inserted into the case 100, the opening guides 104a and 104b and the guide rollers 106a and 106b may move to distant positions from positions in FIG. 6A. This will be described with reference to FIG. 6C.

In FIG. 6A a reference numeral 203 represents a terminal installed on the cap plate 202. The vacuum adsorber 205 may hold the electrode assembly 200 by suctioning a surface of the cap plate 202 where the terminal 203 is not installed (see FIG. 3).

An operation of the horizontal insert device configured as described above will be described.

First, FIG. 6A shows a state in which the case 100 is lying on its side and fixed, the electrode assembly support 204 holds and pushes the electrode assembly 200, and the block 206a positioned at the rightmost side among the divided blocks 206a to 206c supporting the downward surface of electrode assembly 200 is separated.

Following the above state, FIG. 6B shows a state in which the electrode assembly support 204 continues to push the electrode assembly 200 to the left, the electrode assembly 200 is guided by the guide rollers 106a and 106b and inserted into the opening of the case 100, and all the divided blocks 206a to 206c are separated.

FIG. 6C shows a state in which the electrode assembly 200 is fully inserted into the case 100. Here, a situation in which the opening guides 104a and 104b and the guide rollers 106a and 106b are separated outward and away from each other by an outer surface of the electrode assembly support 204 can be seen. This configuration may be implemented in a manner in which a sensor detects that the electrode assembly 200 is fully inserted into the case 100, and in this case, an actuator is used to move the opening guides 104a and 104b and the guide rollers 106a and 106b to be separated, but present disclosure is not limited thereto. For example, this configuration may be implemented in a manner in which a mechanical element (e.g., a cam) is used to mechanically move the opening guides 104a and 104b and the guide rollers 106a and 106b when the electrode assembly 200 is fully inserted into the case 100.

FIG. 7 shows an exemplary embodiment of a disconnection and separation mechanism of the divided blocks 206a to 206c of the downward surface support.

The divided blocks 206a to 206c of the downward surface support may be disconnected and separated using a fluid cylinder 210. That is, the first divided block 206a is installed in a first fluid cylinder 210a and may be reciprocally moved up and down. The second divided block 206b is installed in a second fluid cylinder 210b and may be reciprocally moved up and down. The third divided block 206c is installed in the third fluid cylinder 210c and may be reciprocally moved up and down. Due to this mechanism, when the electrode assembly 200 is moved horizontally and inserted into the case 100 by the support member 212 connected to the electrode assembly support 204 holding the electrode assembly 200, the divided blocks 206a to 206c may be sequentially moved down to be disconnected at their positions. Here, the fluid cylinders 210a to 210c may be hydraulic or pneumatic cylinders, but the present disclosure is not limited thereto.

Although not shown in the drawings, other mechanisms for disconnecting and separating the divided blocks 206a to 206c of the downward surface support may be used, such as a link mechanism or a cam mechanism.

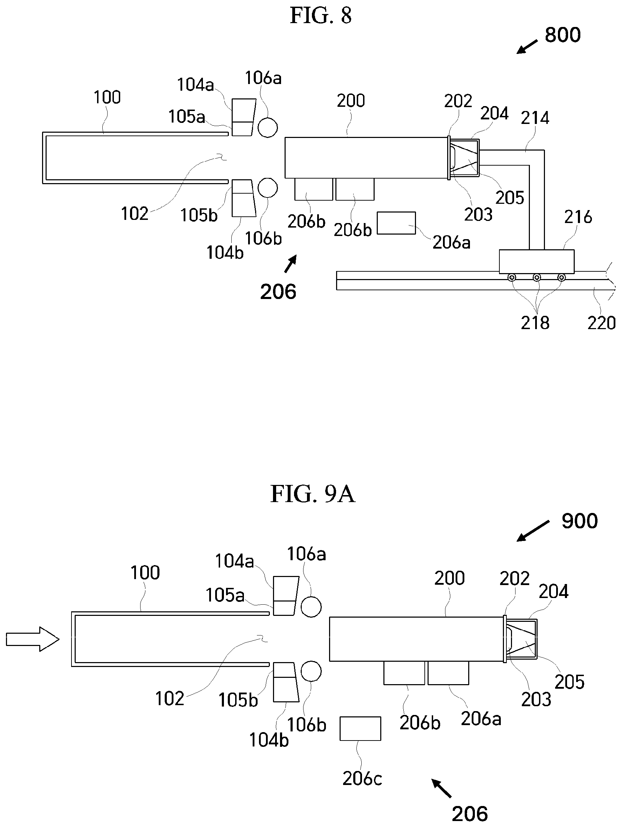

FIG. 8 shows an exemplary embodiment of a moving mechanism 800 of the electrode assembly 200. A rail 220 is installed parallel to a movement direction of the electrode assembly 200, and a moving block 216 moving along the rail 220 is connected to a connection bar 214 which is connected to the electrode assembly support 204. Rollers 218 are installed on the moving block 216, and the moving block 216 includes a driver (not shown) for driving the rollers 218. When the rollers 218 are driven by the driver, the moving block 216 may move the electrode assembly 200 horizontally along the rail 220.

FIGS. 9A to 9C are schematic views of an exemplary embodiment of a horizontal insert device 900 in which the electrode assembly 200 is inserted into the case by moving the case 100 toward the fixed electrode assembly 200 according to an embodiment.

The horizontal insert device 900 according to the exemplary embodiment may include opening guides 104a and 104b for preventing the electrode assembly 200 from being damaged by a sharp edge constituting the surroundings of the opening 102 of the moving case 100 and guiding a front end of the electrode assembly 200 to be inserted into the opening 102 smoothly, guide rollers 106a and 106b positioned on a path through which the electrode assembly 200 is horizontally transported from outside of the case 100 to the opening 102 and cooperating with the opening guides 104a and 104b to guide movement of the electrode assembly 200 toward the opening 102, an electrode assembly support 204 for holding and fixing the cap plate 202 of the electrode assembly 200, and the downward surface support formed of the plurality of divided blocks 206a to 206c for supporting the downward surface of the electrode assembly 200 and preventing the electrode assembly 200 from sagging due to its own weight.

The electrode assembly support 204 may hold and fix the cap plate 202 of the electrode assembly 200 using the vacuum adsorber 205, but the present disclosure is not limited thereto.

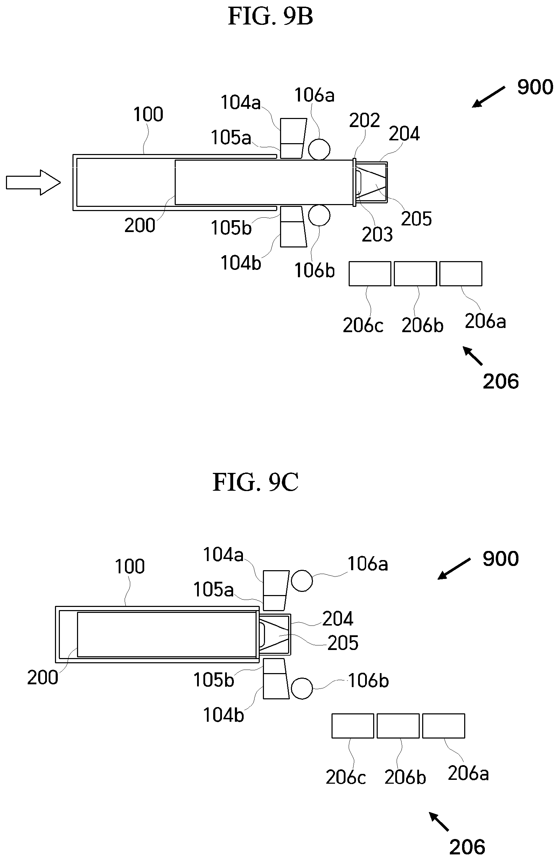

As in the description of FIG. 6C, after the opening guides 104a and 104b and the guide rollers 106a and 106b perform the guide function and thus the electrode assembly 200 is inserted into the case 100, the opening guides 104a and 104b and the guide rollers 106a and 106b may be separated to move to distant positions from the positions in FIG. 6A. This will be described with reference to FIG. 9C.

An operation of the horizontal insert device 900 according to the exemplary embodiment configured as described above will be described.

First, FIG. 9A shows an initial situation in which the electrode assembly 200 is laid to a lateral side and fixed by the electrode assembly support 204, and the case 100 is moved toward the electrode assembly 200. FIG. 9A shows a situation in which the block 206c positioned at the leftmost side among the divided blocks 206a to 206c supporting the downward surface of the electrode assembly 200 is separated so as not to be caught by the guide roller 106b and the opening guide 104b.

Following the above state, FIG. 9B shows a state in which the case 100 continues to move to the right, the guide rollers 106a and 106b roll along the surface of electrode assembly 200, and thus the electrode assembly 200 is inserted into the case 100. It can be seen that all the divided blocks 206a to 206c are separated.

FIG. 9C shows a case in which the electrode assembly 200 is fully inserted into the case 100. Here, a situation in which the opening guides 104a and 104b and the guide rollers 106a and 106b are separated outward and away from each other by an outer surface of the electrode assembly support 204 holding the electrode assembly 200 can be seen. However, the separation of the opening guides 104a, 104b and the guide rollers 106a, 106b is an option and the invention is not limited thereto.

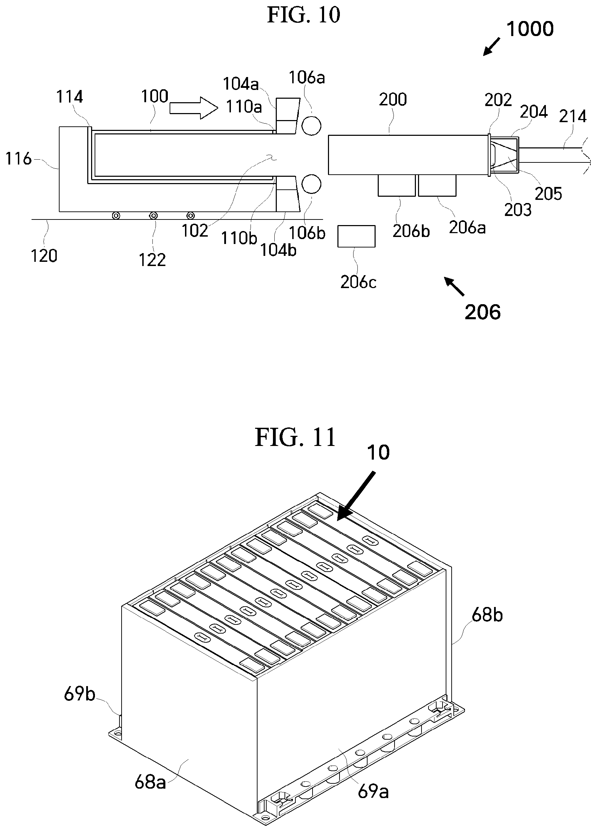

FIG. 10 shows an exemplary embodiment of a moving mechanism 1000 of the case 100. A rail 120 is installed parallel to a movement direction of the case 100, and the case 100 is mounted on a moving object 116 moving along the rail 120. Rollers 122 are installed on the moving object 116, and the moving object 116 includes a driver (not shown) for driving the rollers 122. However, the driver may be present at a different location as a separate component from the moving object 116. When the rollers 122 are driven by the driver, the moving object 116 may move the case 100 horizontally. In FIG. 10, the electrode assembly support 204 holding the electrode assembly 200 may be fixed to another fixing body (not shown) through a connection rod 222.

A method for manufacturing a secondary battery according to some embodiments of the present disclosure is described. The method for manufacturing a secondary battery may include manufacturing a case 100, assembling a cap plate 202 with an electrode assembly 200, mounting and supporting the electrode assembly 200, mounting and supporting the case 100, and performing a horizontal insertion by horizontally moving one of the electrode assembly 200 and the case 100 to insert the electrode assembly 200 into the case 100.

According to some embodiments, supporting the downward surface, which faces downward, of the horizontally mounted electrode assembly 200 with a plurality of divided blocks 206a-c may be additionally included. While the horizontal inserting of the case 100 and the electrode assembly 200 is performed, the plurality of divided blocks 206a-c may be sequentially disconnected so as not to be caught on a surrounding member of the electrode assembly 200 or a surrounding member of the case 100.

According to some embodiments, the horizontal inserting may include inserting the electrode assembly into the case 100 by horizontally moving the electrode assembly 200 using an electrode assembly moving mechanism 800, 1000 which moves the electrode assembly horizontally.

Alternatively, in some embodiments, the horizontal inserting may include inserting the electrode assembly 200 by horizontally moving the case 100 using a case moving mechanism (900) which moves the case horizontally.

Hereinafter, any material that is usable for the secondary battery according to some embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, or combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used as the composite oxide: LiₐA_{1-b}X_{b}O_{2-c}D_{c} (0.90≤a≤1.8, 0<b≤0.5, 0≤c≤0.05); LiₐMn_{2-b}X_{b}O_{4-c}D_{c} (0.90≤a≤1.8, 0<b≤0.5, 0≤c≤0.05); LiₐNi_{1-b-c}Co_{b}X_{c}O_{2-α}D_{α} (0.90≤a≤1.8, 0<b≤0.5, 0≤c≤0.5, 0<α<2); LiₐNi_{1-b-c}Mn_{b}X_{c}O_{2-α}D_{α} (0.90≤a≤1.8, 0<b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001<b≤0.1); LiₐCoG_{b}O₂ (0.90≤a≤1.8, 0.001<b≤0.1); LiₐMn_{1-b}G_{b}O₂ (0.90≤a≤1.8, 0.001<b≤0.1); LiₐMn₂G_{b}O₄ (0.90≤a≤1.8, 0.001<b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8), and/or the like.

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

In some examples. the content of the positive electrode active material may be in a range of about 90 wt% to about 99.5 wt% on the basis of 100 wt% of the positive electrode active material layer, and the content of the binder and the conductive material may be in a range of about 0.5 wt% to about 5 wt%, respectively, on the basis of 100 wt% of the positive electrode active material layer. The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, a transition metal oxide, and/or the like.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x<2), a Si-based alloy, or a combination thereof.

The silicon-carbon composite may be a composite of silicon and amorphous carbon. According to some embodiments, the silicon-carbon composite is in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, or combinations thereof may be used.

An electrolyte for a lithium secondary battery may include a non-aqueous organic solvent, a lithium salt, and/or the like.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). The separator may include polyethylene, polypropylene, polyvinylidene fluoride, or a multilayer film of two or more layers thereof.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂Os, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or combinations thereof, but is not limited thereto.

The organic material and the inorganic material may be mixed in one coating layer or may be in the form of a coating layer containing an organic material and a coating layer containing an inorganic material that are laminated on each other.

FIG. 11 is an exemplary view of a secondary battery module in which secondary batteries 10 manufactured according to the above-described embodiments of the present disclosure are arranged. According to high capacity of a secondary battery for an electric vehicle, a plurality of secondary battery cells are arranged and connected in the horizontal and/or vertical directions to manufacture secondary battery modules. A plurality of secondary batteries 10 are arranged in a space formed by a pair of end plates 68a and 68b facing each other and a pair of side plates 69a and 69b facing each other. The arrangement direction and number of secondary batteries 10 may be designed to obtain a desired voltage and current specifications.

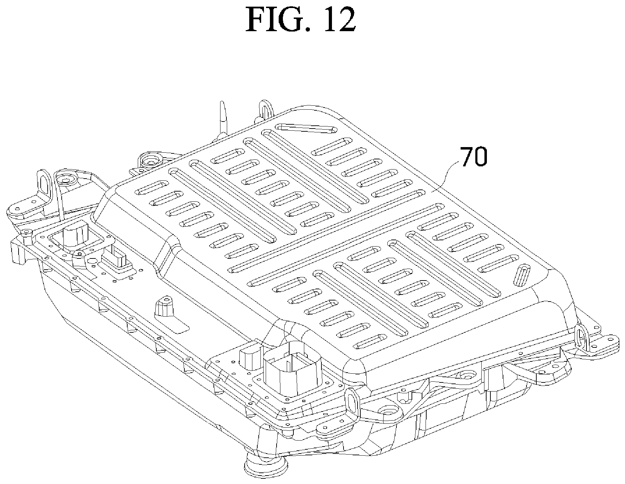

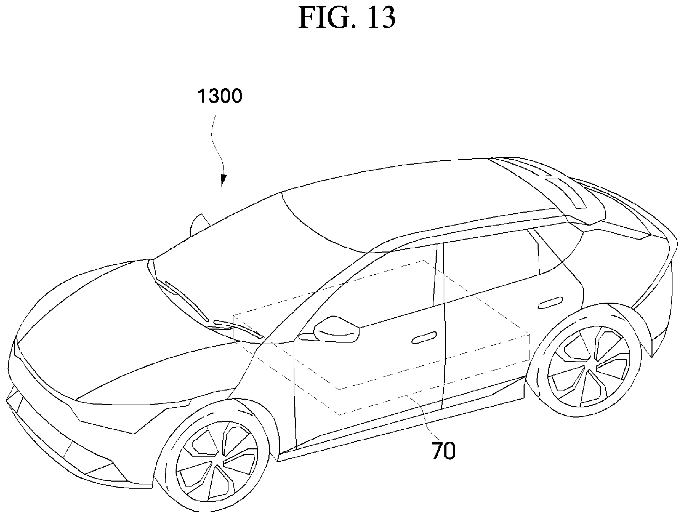

FIG. 12 shows an exemplary embodiment of a secondary battery pack 70 manufactured to apply the secondary battery module shown in FIG. 11 to an actual product (e.g., a vehicle 1300, FIG. 13). The secondary battery pack may be manufactured by embedding the plurality of secondary battery modules into a pack housing designed to be mounted in an actual product. The pack housing may include fasteners and electrical outlets necessary for mounting a pack housing in a product. In Fig. 12, for convenience of illustration, bus bars for electrical connection of the secondary batteries, cooling units, external terminals, and other related elements are omitted.

The secondary battery pack can be mounted on the vehicle 1300 (FIG. 13). As one example, the vehicle 1300 may be an electric vehicle, a hybrid vehicle, or a plug-in hybrid vehicle. The vehicle 1300 may be a four-wheel drive vehicle or a two-wheel drive vehicle. FIG. 13 is a view for describing an exemplary vehicle 1300 including the secondary battery pack 70 shown in FIG. 12.

FIG. 13 illustrates the secondary battery pack 70 according to an exemplary embodiment of the present disclosure mounted on a lower portion of a vehicle body of an exemplary vehicle 1300. The vehicle 1300 operates by receiving power from the secondary battery pack 70 according to one embodiment of the present disclosure.

According to some embodiments, deformation of related members such as current collectors due to the weight of an electrode assembly 200 may be avoided and a balanced and stable assembly process can be performed by assembling a case 100 and an electrode assembly 200 in a state in which wide surfaces of the case 100 and the electrode assembly 200 become a downward surface.

Although the present disclosure has been described above with respect to some embodiments thereof, the present disclosure is not limited thereto. Various suitable modifications, variations, and equivalents thereof are within the scope of the claims.

The embodiments described in this specification and the configurations shown in the drawings are only some of one or more embodiments of the present disclosure and do not represent all of the aspects of the present disclosure. Accordingly, it should be understood that there may be various equivalents and modifications that can replace or modify one or more embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of"1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

## Claims

1. An apparatus for manufacturing a secondary battery, comprising a horizontal insert unit in which a cap plate (61, 202) is assembled and which is configured to horizontally insert a horizontally mounted electrode assembly (40, 200) into an opening (102) of a horizontally mounted case (100), the horizontal insert unit comprising:
an electrode assembly support (204) configured to horizontally mount and support the electrode assembly (40, 200); and
a case support (108) assembly configured to horizontally mount and support the case (100), wherein
one of the electrode assembly (40, 200) and the case (100) is provided to horizontally move in order to insert the electrode assembly (40, 200) into the case (100).

2. The apparatus as claimed in claim 1, wherein the electrode assembly support (204) comprises a vacuum adsorber (71, 205) configured to support the cap plate (61, 202) assembled with the electrode assembly (40, 200).

3. The apparatus as claimed in claim 1 or 2, further comprising a downward surface support configured to hold up and support a downward surface of the electrode assembly (40, 200), which is a surface facing downward.

4. The apparatus as claimed in claim 3, wherein:
the downward surface support comprises a plurality of divided blocks (206a, 206b) configured to hold up the downward surface of the electrode assembly (40, 200); and
the plurality of divided blocks (206a, 206b) are sequentially disconnected during the horizontal insertion of the case (100) and the electrode assembly (40, 200).

5. The apparatus as claimed in any one of the previous claims, wherein the horizontal insert unit further comprises:
an opening guide (104a, 104b) installed around the opening (102) to guide the electrode assembly (40, 200) into the opening (102) of the case (100); and
a guide roller (106a, 106b) configured to guide the electrode assembly (40, 200) to move horizontally toward the opening (102) of the case (100).

6. The apparatus as claimed in any one of the previous claims, wherein:
the horizontal insert unit further includes an electrode assembly moving mechanism (800, 1000) configured to horizontally move the electrode assembly (40, 200); and
the electrode assembly (40, 200) moves horizontally to be inserted into the case (100).

7. The apparatus as claimed in any one of the previous claims 1 to 5, wherein:
the horizontal insert unit further comprises a case (100) moving mechanism (800, 1000) configured to horizontally move the case (100); and
the case (100) moves horizontally to insert the electrode assembly (40, 200) therein.

8. A method of manufacturing a secondary battery, comprising:
obtaining a case (100);
assembling a cap plate (61, 202) with an electrode assembly (40, 200);
mounting and supporting the electrode assembly (40, 200) horizontally;
mounting and supporting the case (100) horizontally; and
performing a horizontal insertion by horizontally moving one of the electrode assembly (40, 200) and the case (100) to insert the electrode assembly (40, 200) into the case (100).

9. The method as claimed in claim 8, further comprising supporting a downward surface, which faces downward, of the horizontally mounted electrode assembly (40, 200) with a plurality of divided blocks (206a, 206b),
wherein the plurality of divided blocks (206a, 206b) are sequentially disconnected during the horizontal insertion of the case (100) and the electrode assembly (40, 200).

10. The method as claimed in claim 8 or 9, wherein the horizontal inserting comprises inserting the electrode assembly (40, 200) into the case (100) by horizontally moving the electrode assembly (40, 200) using an electrode assembly moving mechanism (800, 1000) which moves the electrode assembly (40, 200) horizontally.

11. The method as claimed in claim 8 or 9, wherein the horizontal inserting comprises inserting the electrode assembly (40, 200) by horizontally moving the case (100) using a case (100) moving mechanism (800, 1000) which moves the case (100) horizontally.

12. A horizontal insert device (600, 900) comprising:
an electrode assembly support (204) configured to horizontally mount and support an electrode assembly (40, 200) in which a cap plate (61, 202) is assembled; and
a case support (108) configured to horizontally mount and support a case (100),
wherein the horizontal insert device (600, 900) is configured such that one of the electrode assembly (40, 200) and the case (100) horizontally moves to insert the electrode assembly (40, 200) into the case (100).

13. The horizontal insert device (600, 900) as claimed in claim 12, further comprising a downward surface support which is configured to hold up and support a downward surface of the electrode assembly (40, 200), which is a surface facing downward, and includes a plurality of divided blocks (206a, 206b),
wherein the plurality of divided blocks (206a, 206b) are sequentially disconnected during the horizontal insertion of the case (100) and the electrode assembly (40, 200).

14. The horizontal insert device (600, 900) as claimed in claim 12 or 13, further comprising:
an opening guide (104a, 104b) installed around the opening (102) to guide the electrode assembly (40, 200) into the opening (102) of the case (100); and
a guide roller (106a, 106b) configured to guide the electrode assembly (40, 200) to move horizontally toward the opening (102) of the case (100).

15. The horizontal insert device (600, 900) as claimed in any one of claims 12 to 14, further comprising one of:
an electrode assembly moving mechanism (800, 1000) configured to horizontally move the electrode assembly (40, 200), wherein the electrode assembly (40, 200) moves horizontally to be inserted into the case (100); and a case (100) moving mechanism (800, 1000) configured to horizontally move the case (100), wherein the case (100) moves horizontally to insert the electrode assembly (40, 200) therein.
